# FASCICULE DE BREVET EUROPEEN

(11) **EP 2 171 833 B1**
(45) Date de publication et mention de la délivrance du brevet: **01.12.2010**
(21) Numéro de dépôt: 08805856.5
(22) Date de dépôt: 27.05.2008
(51) Int. Cl.: H02K 11/04, H02P 25/22, H02M 7/162, H02K 3/04

(54) **DISPOSITIF D'ALIMENTATION POUR UN ALTERNATEUR DE VEHICULE AUTOMOBILE ET ALTERNATEUR METTANT EN OEUVRE UN TEL DISPOSITIF**
STROMVERSORGUNGSVORRICHTUNG FÜR EINEN WANDLER IN EINEM KRAFTFAHRZEUG UND WANDLER MIT EINER SOLCHEN VORRICHTUNG
SUPPLY DEVICE FOR A MOTOR VEHICLE ALTERNATOR, AND ALTERNATOR EMPLOYING SUCH A DEVICE

(30) Priorité: 18.07.2007 FR 0756575
(43) Date de publication de la demande: 07.04.2010
(73) Titulaire: Valeo Equipements Electriques Moteur, 94046 Créteil Cedex (FR)
(72) Inventeur: TUNZINI, Marc, F-78000 Versailles (FR); CHEMIN, Michaël, F-51700 Festigny (FR)
(86) Numéro de dépôt international: PCT/FR2008/050912
(87) Numéro de publication internationale: WO 2009/019344

(56) Documents cités:
- EP-A- 0 707 372
- DE-A1- 10 209 054
- FR-A- 2 248 641
- FR-A- 2 510 319
- US-A- 4 339 704
- US-A- 5 418 436

## Description

La présente invention se rapporte au domaine des alternateurs pour véhicules automobiles, et concerne plus particulièrement un dispositif d'alimentation et les modes de fonctionnement qui lui sont associés pour de tels alternateurs. Elle s'étend également à un alternateur comportant un tel dispositif d'alimentation et mettant en oeuvre de tels modes de fonctionnement.

De manière classique, un alternateur monté sur un véhicule automobile est constitué d'un stator dans lequel est placé un rotor dont un arbre est entraîné en rotation par le moteur à combustion interne du véhicule au moyen d'un dispositif approprié. De manière également classique, le stator comporte au moins deux bobinages d'induit reliés à un dispositif de redressement pour former deux sources d'alimentation électrique.

Il résulte du mode d'entraînement du rotor que les performances d'un tel alternateur sont variables avec le régime du moteur à combustion interne. Or les réseaux de bord du véhicule nécessitent une alimentation électrique de tension constante.

Afin de remédier à cet inconvénient, il est notamment connu de réaliser deux bobinages triphasés indépendants au niveau du stator, et d'y adjoindre un circuit électronique de liaison entre lesdits bobinages permettant, selon le régime du moteur à combustion interne du véhicule, de connecter lesdits bobinages en série ou en parallèle. Plus précisément, ledit circuit électronique de liaison réalise une connexion en série desdits bobinages lorsque le régime du moteur est faible afin d'obtenir une tension à vide élevée et un courant élevé à faible vitesse à la sortie de l'alternateur, et une connexion en parallèle à régime élevé dudit moteur à combustion interne, afin d'augmenter le courant délivré par ledit alternateur.

De manière connue, chacun des bobinages triphasés est associé à un dispositif de redressement à diodes, et plusieurs solutions sont connues dans l'état de la technique pour réaliser le circuit électronique de liaison précité comme, par example le document FR 224 8641. Le document FR2807232 propose d'associer chacun des dispositifs de redressement à diodes des deux bobinages triphasés à un pont redresseur auxiliaire également composé de diodes, et de relier lesdits ponts auxiliaires par des moyens commutables tels que, à titre non exhaustif, un transistor, une diode commandée, ou un interrupteur. Le document US6005786 propose, pour sa part, de placer directement aux sorties des deux bobinages triphasés, associés chacun à leur dispositif de redressement, un ensemble de moyens commutables permettant de relier entre elles certaines des sorties desdits bobinages selon le nombre et la nature des moyens commutables activés.

Ces modes de couplage, s'ils permettent d'obtenir des performances d'alternateur satisfaisantes, impliquent toutefois l'utilisation d'un nombre relativement important de composants électroniques, ce qui en augmente l'encombrement. L'alternateur étant, sur le véhicule automobile, mis en place dans un espace réduit, les contraintes liées à son encombrement impliquent par ailleurs que lesdits composants électroniques soient relativement proches les uns des autres. Il en résulte qu'il est alors nécessaire d'y adjoindre un ensemble de moyens permettant la dissipation thermique des calories dégagées en cours de fonctionnement (ventilateurs, dispositifs de refroidissement par circulation de liquide, ...), ce qui augmente la complexité de l'alternateur, et, par là, son coût.

La présente invention a pour but de proposer un dispositif de redressement pour un alternateur destiné à un véhicule automobile, dans lequel le nombre de composants électroniques soit réduit, permettant ainsi de réduire l'encombrement dudit alternateur, tout en conservant des performances élevées en termes de tension et de courant délivrés quel que soit le régime du moteur à combustion interne du véhicule.

Dans ce but, la présente invention a pour objet principal un dispositif d'alimentation électrique, notamment pour le réseau de bord d'un véhicule automobile, caractérisé en ce qu'il comporte un ensemble de bobines d'induit assemblées selon un mode de couplage polygonal et en ce que lesdites bobines sont reliées à un unique pont redresseur comportant un ensemble d'éléments commandables permettant la commutation entre un premier mode de fonctionnement dans lequel certaines bobines d'induit sont électriquement connectées en série et un second mode de fonctionnement dans lequel toutes lesdites bobines d'induit sont électriquement connectées en parallèle.

Selon un mode de réalisation préféré de l'invention, le dispositif d'alimentation comporte six bobines d'induit, assemblées selon un couplage hexagonal. Dans ce qui suit, l'invention sera préférentiellement décrite selon ce mode de réalisation préféré, toutefois non exclusif.

Dans ce mode de réalisation préféré, selon une caractéristique de l'invention, les éléments commandables du dispositif de redressement sont constitués d'un ensemble de six thyristors, et sont placés aux bornes des bobines d'induit en alternance avec un ensemble de diodes. Plus précisément, selon un mode de réalisation avantageux de l'invention, l'une des bornes de chacune des bobines d'induit est reliée à un ensemble de deux thyristors, l'autre borne étant reliée à un ensemble de deux diodes.

Selon une autre caractéristique de l'invention, ladite borne de chacune des bobines d'induit reliée auxdits deux thyristors est reliée à l'anode de l'un d'eux, alors dénommé thyristor positif, et à la cathode de l'autre, en conséquence dénommé thyristor négatif. Il en est de même pour les ensembles de deux diodes précités, qui sont ainsi formés chacun d'une diode dite positive car reliée par son anode à la bobine d'induit et d'une diode dite négative car reliée par sa cathode à ladite bobine.

Avantageusement, les anodes des différents éléments de redressement dits négatifs sont reliées à la masse, et les cathodes des différents éléments de redressement dits positifs sont reliées à la ligne d'alimentation du réseau de bord du véhicule automobile.

Il résulte de ce qui précède que, lorsque les éléments commutables (ici les thyristors) ne sont pas activés, les bobines d'induit sont reliées en série deux à deux. Compte tenu du déphasage temporel de 120 degrés existant, du fait du couplage hexagonal, entre deux bobines consécutives, l'ensemble délivre alors une force électromotrice égale à la force électromotrice délivrée par l'une des bobines multipliée par un facteur égal à racine de trois. Dans l'hypothèse où les bobines d'induit sont constituées de N spires, tout se passe donc comme si lesdites bobines comportaient un nombre supérieur de spires, plus précisément le dispositif d'alimentation selon l'invention se comporte comme si ses bobines d'induit étaient formées de N x √3 spires. Il en résulte que la puissance délivrée par le dispositif d'alimentation selon l'invention est supérieure à la puissance que délivrerait le même dispositif si les bobines d'induit qui le constituent comportaient N spires. Dans le cadre de l'application de l'invention à la réalisation d'un alternateur pour un véhicule automobile, cette situation sera recherchée pour les bas régimes de fonctionnement du moteur à combustion interne, régimes pour lesquels l'invention permettra d'obtenir un courant supérieur pour de faibles vitesses de rotation du rotor.

Inversement, lorsque les éléments commutables (ici les thyristors) sont activés, les bobines d'induit du dispositif d'alimentation selon l'invention sont électriquement connectées en parallèle, ce qui permet d'accroître le courant total délivré. Dans le cadre de l'application de l'invention à la réalisation d'un alternateur pour un véhicule automobile, cette situation sera plutôt recherchée pour les régimes élevés de fonctionnement du moteur à combustion interne, régimes pour lesquels l'invention permettra d'obtenir un courant plus élevé à la sortie de l'alternateur.

L'invention permet donc, grâce au couplage polygonal des bobines d'induit et à la mise en place d'éléments de redressement commandables tels que des thyristors, de réaliser un dispositif d'alimentation simple permettant une commutation rapide entre un état dans lequel il délivre une tension élevée et un état dans lequel il délivre un courant élevé, tout en mettant en oeuvre un dispositif de redressement unique composé d'un plus petit nombre d'éléments que les dispositifs de redressement classiquement utilisés pour atteindre le même but.

Appliquée au domaine des alternateurs pour véhicules automobiles, l'invention permet donc, par la réduction du nombre de composants nécessaires au redressement, de réduire l'encombrement de l'alternateur obtenu, tout en disposant d'un système présentant des performances élevées par la commutation entre l'état "série" et l'état "parallèle" des bobines d'induit. Elle permet également de diminuer le nombre de spires constituant lesdites bobines d'induit tout en maintenant un niveau de performances élevé quels que soient les régimes de fonctionnement du moteur.

Elle permet également, par la réduction du nombre de composants de redressement, de simplifier le dispositif de dissipation thermique associé à ceux-ci, et permet enfin, par la simplicité de fonctionnement de son dispositif de redressement, l'utilisation de composants standard de moindre coût.

L'invention permet donc, en définitive, de réaliser un alternateur plus compact, plus simple, et donc moins coûteux que les alternateurs connus dans l'état de la technique, tout en présentant des performances au moins aussi élevées que ces derniers, voire, en particulier pour les bas régimes du moteur du véhicule, supérieures.

Il est à noter que le nombre d'éléments commandables du dispositif de redressement n'est pas limité à celui qui vient d'être évoqué, et que, selon des variantes de réalisation, ce nombre peut, en particulier, ainsi qu'il sera développé plus loin, être plus faible. De même, l'agencement décrit ci-dessus desdits éléments de redressement n'est pas exclusif, ainsi qu'il sera également précisé plus loin.

D'autres caractéristiques et avantages de l'invention apparaîtront à la lecture de la description qui suit, en référence aux figures suivantes dans lesquelles :
- la figure 1 est une représentation schématique d'un mode de réalisation préféré d'un dispositif d'alimentation selon l'invention,
- la figure 2 est une courbe présentant, en fonction du régime du moteur à combustion interne d'un véhicule automobile, le courant délivré par un alternateur comportant un dispositif d'alimentation selon l'invention,
- la figure 3 est une représentation schématique d'un mode de réalisation alternatif de l'invention,
- la figure 4 est une vue schématique en perspective de la partie arrière d'un alternateur mettant en oeuvre un dispositif d'alimentation selon l'invention, et
- la figure 5 représente un élément commandable avec transistors MOSFET.

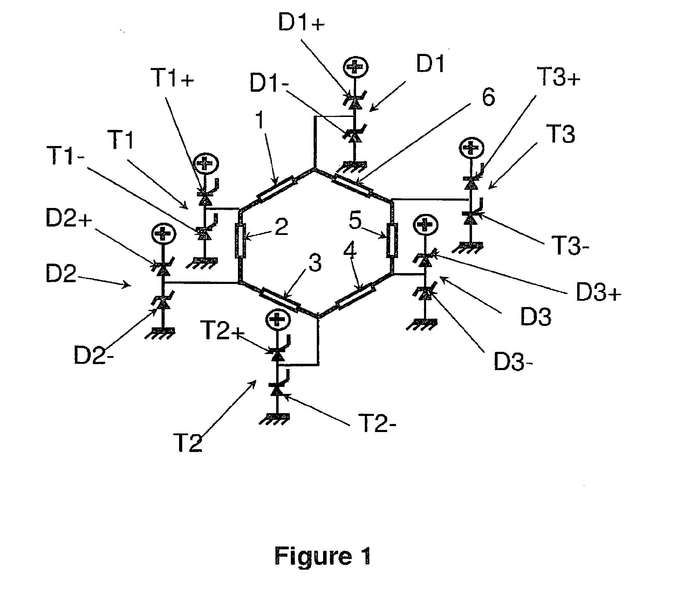

Selon le mode de réalisation préféré de l'invention présenté par la figure 1 et évoqué plus haut, le dispositif d'alimentation selon l'invention comporte six bobines numérotées de 1 à 6 et reliées les unes aux autres selon un couplage hexagonal : la borne de sortie de la bobine 1 est ainsi reliée à la borne d'entrée de la bobine 2, dont la borne de sortie est reliée à la borne d'entrée de la bobine 3, et ainsi de suite, la borne de sortie de la bobine 6 étant reliée à la borne d'entrée de la bobine 1. On supposera dans ce qui suit que chacune des bobines 1 à 6 est constituée de N spires, chacune des N spires pouvant être formée, de manière connue, d'un nombre quelconque prédéfini de fils conducteurs.

Selon l'invention, l'ensemble formé par les bobines 1 à 6 est associé à un dispositif de redressement unique comportant un ensemble d'éléments commandables.

Selon le mode de réalisation préféré de l'invention présenté par la figure 1, ce dispositif de redressement comporte un ensemble de thyristors T formant l'ensemble d'éléments commandables et un ensemble de diodes D dont le nombre et l'agencement vont maintenant être décrits.

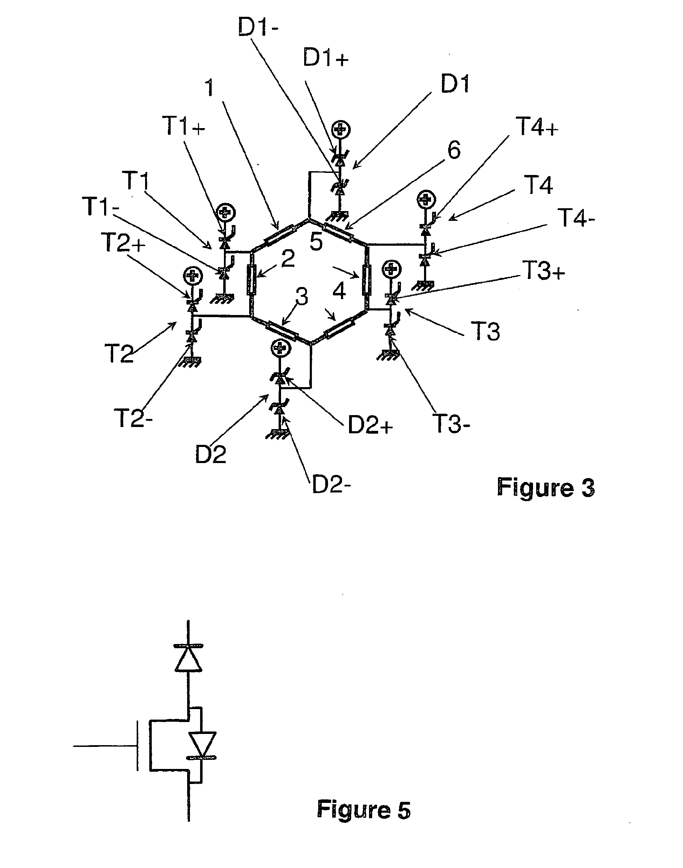

En variante, les éléments commandables peuvent être formés ou comprendre par des éléments de commutation à transistors notamment de type MOSFET, tels que montrés à la figure 5. Ces éléments de commutation à transistors peuvent avantageusement remplacer les thyristors dans certaines applications de l'invention.

Comme montré à la figure 1, les thyristors T sont au nombre de six, groupés par paires T1, T2, et T3. Il en est de même pour les diodes D, qui sont également au nombre de six, groupées par paires D1, D2, D3. Selon le mode de réalisation préféré de l'invention présenté par la figure 1, non limitatif, les diodes des paires D1, D2, et D3 sont des diodes Zener afin d'assurer la fonction de protection du réseau.

Selon l'invention, les paires de thyristors T et les paires de diodes D sont alternativement placées aux bornes des bobines 1 à 6, comme le montre la figure 1. Ainsi, chacune desdites bobines 1 à 6 est reliée, par l'une de ses bornes, à une paire de thyristors T, et, par son autre borne, à une paire de diodes D.

Plus précisément, en référence par exemple à la bobine 1, la borne reliée à la paire de thyristors T1 est reliée, d'une part, à l'anode de l'un desdits thyristors, en conséquence dénommé thyristor positif et référencé T1 + sur la figure 1, et, d'autre part, à la cathode de l'autre thyristor de ladite paire T1, en conséquence dénommé thyristor négatif et référencé T1- sur la figure 1. Il en est de même pour la paire de diodes D1 reliée à l'autre borne de ladite bobine 1 : ladite borne de ladite bobine 1 est ainsi reliée à l'anode de l'une des diodes D1, ou diode positive désignée par la référence D1+, et à la cathode de l'autre des diodes D1, ou diode négative désignée par la référence D1-.

Il en est ainsi pour l'ensemble des bobines 1 à 6, et le dispositif de redressement du dispositif d'alimentation selon l'invention est ainsi composé de deux sous-ensembles de composants dits "positifs" ou "négatifs" car respectivement reliés par leur anode ou par leur cathode aux bornes desdites bobines.

Avantageusement, et ainsi que le montre la figure 1, les anodes des composants du sous-ensemble "négatif" sont reliées à la masse, et les cathodes des composants du sous-ensemble "positif" sont reliées à une ligne d'alimentation, par exemple la ligne d'alimentation du réseau de bord d'un véhicule automobile.

Lorsque les thyristors T1, T2, et T3 ne sont pas activés, les bobines 1 et 2 sont électriquement connectées en série, ainsi que les bobines 3 et 4, et les bobines 5 et 6. Il en résulte que la force électromotrice générée par le dispositif d'alimentation selon l'invention est égale à la somme vectorielle des forces électromotrices générées par chacune des bobines reliées en série. Ces bobines étant deux à deux successivement déphasées de 120 degrés compte tenu du montage hexagonal choisi, il en résulte que la force électromotrice totale générée par le dispositif d'alimentation selon l'invention est égale à la force électromotrice générée par l'une des bobines multipliée par un facteur égal à la racine de trois. Si chaque bobine est, ainsi qu'il a été précisé plus haut, composée de N spires, les performances du dispositif selon l'invention seront donc égales à celles d'un dispositif conventionnel composé de bobines constituées de N fois racine de trois spires (N x √3).

A performances égales, le dispositif selon l'invention permet donc de réduire le nombre de spires par bobine, et, ainsi, d'augmenter la puissance de la machine à volume égal.

Lorsque les thyristors des paires T1, T2, T3 sont activés, les bobines 1 à 6 sont électriquement connectées en parallèle. Il en résulte que la force électromotrice générée par le dispositif selon l'invention est égale à celle générée par chaque bobine, et que le courant délivré par ledit dispositif est augmenté. Les performances du dispositif selon l'invention sont ici celles d'un dispositif constitué de bobines de N spires placées en parallèle.

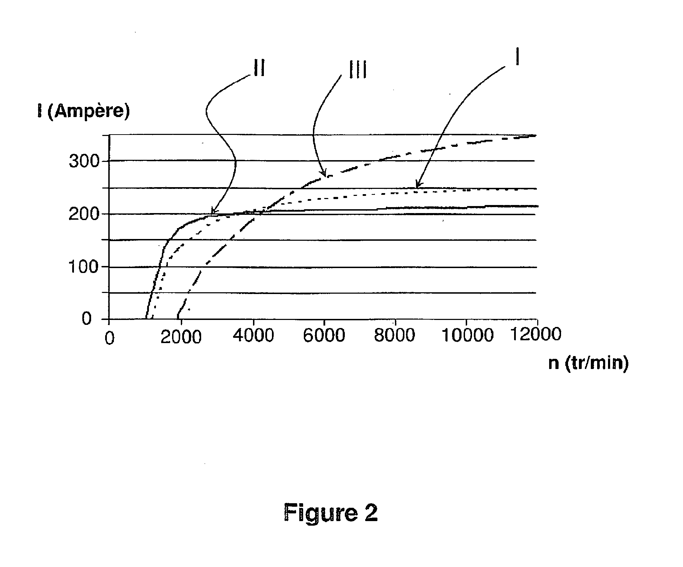

Ces phénomènes sont illustrés par la figure 2, qui présente le courant délivré par un alternateur en fonction du nombre de tours par minute du moteur à combustion interne qu'il équipe.

La courbe I, en traits discontinus, présente le courant délivré par un alternateur tel que classiquement connu dans l'état de la technique, comportant deux bobinages triphasés de six spires chacun reliés en série par l'un des dispositifs évoqués au début du présent document. Les courbes II et III, respectivement en trait plein et en traits mixtes, présentent les performances d'un alternateur comportant un dispositif d'alimentation selon l'invention dont les bobines comportent 5 spires, dans ses différents modes de fonctionnement.

Plus précisément, la courbe II présente le courant délivré au moyen d'un dispositif selon l'invention lorsque les paires de thyristors T1, T2, T3 ne sont pas activées, c'est-à-dire lorsque les bobines 1 et 2, 3 et 4, 5 et 6, respectivement, sont électriquement connectées en série deux à deux. Il apparaît clairement que, à bas régime du moteur, les performances du dispositif selon l'invention sont supérieures à celles du dispositif dont les bobinages comportent 6 spires. Il est même à noter que, aux environs de 2000 tours par minute, qui correspond au régime de ralenti du moteur, le courant délivré par l'alternateur muni du dispositif selon l'invention est supérieur à celui fourni par un dispositif dont les bobinages comportent 6 spires.

L'invention permet donc, pour de bas régimes du moteur, de réaliser un alternateur dont les performances sont au moins égales, voire supérieures, à celles d'un dispositif dont les bobinages comportent un plus grand nombre de spires.

La courbe III, en traits mixtes sur la figure 2, présente le courant délivré au moyen d'un dispositif selon l'invention lorsque les paires de thyristors T1, T2, T3 sont activées. Ainsi qu'il a été exposé précédemment, les bobines 1 à 6 sont alors électriquement connectées en parallèle. Il en résulte une augmentation notable du courant délivré par l'alternateur équipé d'un tel dispositif. Ceci est particulièrement visible sur la figure 2, pour les régimes élevés du moteur, au regard du courant délivré par l'alternateur conventionnel dont la courbe caractéristique est présentée par la courbe I.

Le dispositif selon l'invention permet ainsi l'obtention, par simple activation des trois paires de thyristors T1, T2, et T3, de deux modes de fonctionnement grâce auxquels l'alternateur d'un véhicule automobile comportant ledit dispositif présente des performances élevées, pour un nombre de spires de bobines réduit.

Le poids d'un tel alternateur peut ainsi être réduit, ce qui réduit d'autant son coût énergétique sur le véhicule. De même, l'ensemble de redressement, unique et constitué uniquement de 6 thyristors et 6 diodes, est simplifié grâce au dispositif selon l'invention, au regard des ponts redresseurs couramment utilisés. Il en résulte que l'encombrement d'un alternateur comportant le dispositif selon l'invention peut encore être réduit, et que la compacité dudit alternateur peut, en outre, être également augmentée par une simplification du dispositif de dissipation thermique des calories dégagées par les composants de l'ensemble de redressement, ceux-ci étant en nombre réduit au regard des alternateurs actuellement connus.

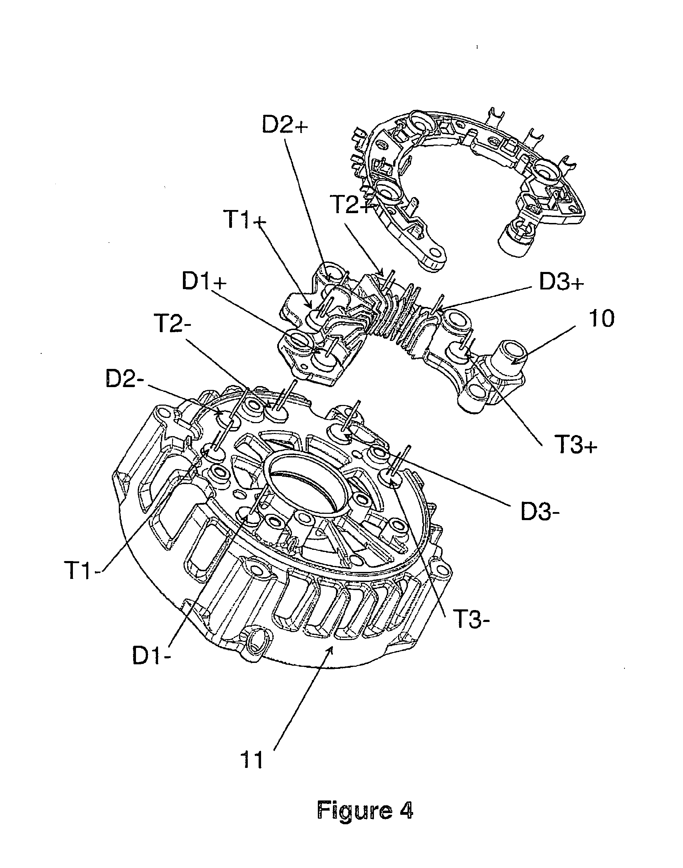

La figure 4 présente un mode de réalisation envisageable pour un alternateur comportant un dispositif selon l'invention.

Sur cette figure sont représentés les dissipateurs positif 10 et négatif 11 d'un alternateur tel que connu dans l'état de la technique, sur lesquels sont classiquement placés les ponts de diodes de redressement, respectivement aux emplacements repérés par les références D+ et D-.

Dans un alternateur mettant en oeuvre le dispositif selon l'invention dans son mode de réalisation préféré décrit ci-dessus, les thyristors T1+, T2+, et T3+ prennent la place de trois des diodes D+, et les thyristors T1-, T2-, et T3- prennent la place de trois des diodes D-. Thyristors et diodes voisinent donc sur les dissipateurs positif et négatif, et l'absence de tout circuit électronique de liaison complémentaire permet d'améliorer la compacité de l'ensemble.

Il est à noter que l'invention n'est pas limitée au mode de réalisation qui vient d'être décrit, et qu'elle s'étend en particulier à toute variante, en particulier toute variante mettant en oeuvre des moyens équivalents ou toute combinaison techniquement opérante de ceux-ci.

Ainsi, par exemple, le nombre de paires de thyristors, fixé à trois dans le mode de réalisation qui vient d'être décrit, peut être fixé à quatre dans un mode de réalisation alternatif de l'invention, présenté par la figure 3.

Selon ce mode de réalisation alternatif, quatre paires de thyristors T1, T2, T3, et T4 sont placées aux bornes des bobines 1 à 6 en alternance avec deux paires de diodes D1 et D2.

Plus précisément, la bobine 1 est reliée, par l'une de ses bornes, à une paire de thyristors T1, et, par son autre borne, à une paire de diodes D2. La bobine 2, pour sa part, est reliée, par l'une de ses bornes, à ladite paire de diodes D2, et, par son autre borne, à une paire de thyristors T2. La bobine 3 est reliée par chacune de ses bornes à deux paires de thyristors, respectivement T2 et T3, alors que la bobine 4 est reliée, par l'une de ses bornes, auxdits thyristors T3, et, par son autre borne, à la deuxième paire de diodes D2. La bobine 5 est alors reliée respectivement auxdites diodes D2 et aux thyristors T4, la bobine 6 étant reliée auxdits thyristors T4 et aux thyristors T1 précités.

Lorsque les thyristors T1, T2, T3, et T4 ne sont pas activés, les bobines 2, 3, 4, d'une part, et 5, 6, 1 d'autre part, sont électriquement reliées en série. De manière analogue à ce qui a été évoqué précédemment, ceci conduira, pour un nombre de spires donné des bobines 1 à 6, à une augmentation du courant délivré par un alternateur comportant un tel dispositif, en particulier aux bas régimes du moteur du véhicule. Lorsque les thyristors T1, T2, T3, et T4 sont activés, mes bobines 1 à 6 sont électriquement connectées en parallèle comme précédemment.

L'invention permet donc de réaliser un dispositif d'alimentation et un alternateur de véhicule simples, compacts, et de moindre coût que les dispositifs et alternateurs actuellement connus, tout en préservant des niveaux de performance élevés.

Il est également à noter que si, selon les modes de réalisation de l'invention présentés par les figures, les diodes D1, D2, et D3 sont des diodes Zener, celles-ci peuvent être remplacées par des diodes standard, de moindre coût, et assurer la fonction de protection du réseau par un dispositif extérieur.

Enfin, il est à préciser que, pour répondre à des contraintes de fonctionnement spécifiques, il peut être envisagé de réaliser le dispositif selon l'invention en utilisant huit, dix, ou douze bobines assemblées selon des modes de couplage respectivement octogonal, décagonal, ou dodécagonal. Dans ces cas, selon des modes de réalisation préférés de l'invention, les éléments commandables du dispositif de redressement comporteront avantageusement quatre, cinq, ou six paires de thyristors placées en alternance avec le même nombre de paires de diodes aux bornes desdites bobines, afin d'obtenir un mode de fonctionnement dans lequel lesdites bobines seront électriquement connectées en série deux à deux.

## Revendications

1. Dispositif d'alimentation électrique, notamment pour le réseau de bord d'un véhicule automobile, **caractérisé en ce qu'**il comporte un ensemble de bobines d'induit assemblées selon un mode de couplage polygonal et **en ce que** lesdites bobines sont reliées à un unique pont redresseur comportant un ensemble d'éléments commandables permettant la commutation entre un premier mode de fonctionnement dans lequel certaines bobines d'induit sont électriquement connectées en série et un second mode de fonctionnement dans lequel toutes lesdites bobines d'induit sont électriquement connectées en parallèle.

2. Dispositif selon la revendication 1, **caractérisé en ce que** les bobines d'induit sont au nombre de six (1, 2, 3, 4, 5, 6) et **en ce qu'**elles sont assemblées selon un mode de couplage hexagonal.

3. Dispositif selon l'une ou l'autre des revendications 1 ou 2, **caractérisé en ce que** lesdits éléments commandables comprennent des thyristors.

4. Dispositif selon la revendication 3, **caractérisé en ce que** les thyristors sont assemblés en trois paires (T1, T2, T3) reliées aux bornes des bobines (1, 2, 3, 4, 5, 6) en alternance avec trois paires de diodes (D1, D2, D3), de telle manière qu'en l'absence d'activation desdits thyristors (T1, T2, T3), lesdites bobines sont électriquement reliées en série deux à deux.

5. Dispositif selon l'une quelconque la revendication 4, **caractérisé en ce que** chacune desdites bobines (1, 2, 3, 4, 5, 6) est reliée, par l'une de ses bornes, respectivement à l'anode de l'une des diodes des paires de diodes (D1, D2, D3) et à la cathode de l'autre diode de ladite paire (D1, D2, D3), et, par son autre borne, respectivement à l'anode de l'un des thyristors de l'une des paires de thyristors (T1, T2, T3) et à la cathode de l'autre thyristor de ladite paire (T1, T2, T3), les anodes desdits thyristors ou diodes reliés par leur cathode aux bobines étant reliées à la masse, et les cathodes desdits thyristors et diodes reliés par leur anode aux bobines étant reliées à la ligne d'alimentation du réseau de bord du véhicule.

6. Dispositif selon l'une quelconque des revendications 1 à 3, **caractérisé en ce que** lesdits thyristors sont assemblés en quatre paires (T1, T2, T3, T4) et le dispositif comporte des diodes qui sont assemblées en deux paires (D1, D2), les thyristors (T1, T2, T3, T4) et les diodes (D1,D2) étant reliées aux bornes des bobines (1, 2, 3, 4, 5, 6) de telle manière que, en l'absence d'activation desdits thyristors, lesdites bobines soient électriquement connectées en série trois à trois.

7. Dispositif selon l'une quelconque des revendications 3 à 6, **caractérisé en ce que** lesdits thyristors sont remplacés partiellement ou en totalité par des éléments commandables à transistor.

8. Alternateur pour un véhicule automobile, **caractérisé en ce qu'**il comporte un dispositif d'alimentation selon l'une quelconque des revendications 1 à 7.

9. Alternateur selon la revendication 8, **caractérisé en ce que** des éléments commandables positifs, reliés par leur anode aux bornes des bobines, sont placés, ainsi que les autres éléments du dispositif d'alimentation reliés par leurs anodes auxdites bobines, sur un dissipateur relié à une ligne d'alimentation du véhicule, et **en ce que** des éléments commandables négatifs, reliés par leur cathode aux bornes des bobines, sont placés, ainsi que les autres éléments du dispositif d'alimentation reliés par leurs cathodes auxdites bobines, sur un dissipateur relié à la masse du véhicule.

## Claims

1. Power supply device, particularly for a motor vehicle's own system, **characterised in that** it comprises a set of armature coils assembled in a polygonal coupling mode and **in that** the said coils are connected to a single bridge rectifier comprising a set of controllable elements with which switching can be carried out between a first operating mode in which some armature coils are electrically connected in series and a second operating mode in which all of the said armature coils are electrically connected in parallel.

2. Device according to claim 1, **characterised in that** there are six armature coils (1, 2, 3, 4, 5 and 6) and **in that** these are assembled in a hexagonal coupling mode.

3. Device according to either of claims 1 or 2, **characterised in that** the said controllable elements comprise thyristors.

4. Device according to claim 3, **characterised in that** the thyristors are assembled in three pairs (T1, T2 and T3) connected to the terminals of the coils (1, 2, 3, 4, 5 and 6) alternating with three pairs of diodes (D1, D2 and D3), in such a way that, in the absence of activation of the said thyristors (T1, T2 and T3), the said coils are electrically connected in series, two by two.

5. Device according to claim 4, **characterised in that** each of the said coils (1, 2, 3, 4, 5 and 6) is connected, through one of its terminals, to the anode of one of the diodes of the pairs of diodes (D1, D2 and D3) and to the cathode of the other diode of the said pair (D1, D2 and D3) respectively and - through its other terminal - to the anode of one of the thyristors of one of the pairs of thyristors (T1, T2 and T3) and to the cathode of the other thyristor of the said pair (T1, T2 and T3) respectively, the anodes of the said thyristors or diodes connected through their cathodes to the coils being connected to earth and the cathodes of the said thyristors and diodes connected through their anodes to the coils being connected to the power supply line of the vehicle's own system.

6. Device according to any of claims 1 to 3, **characterised in that** the said thyristors are assembled in four pairs (T1, T2, T3 and T4) and the device comprises diodes which are assembled in two pairs (D1 and D2), the thyristors (T1, T2, T3 and T4) and the diodes (D1 and D2) being connected to the terminals of the coils (1, 2, 3, 4, 5 and 6) in such a way that, in the absence of activation of the said thyristors, the said coils are electrically connected in series, three by three.

7. Device according to any of claims 3 to 6, **characterised in that** the said thyristors are replaced partially or totally with transistor controllable elements.

8. Alternator for a motor vehicle, **characterised in that** it comprises a power supply device according to any of claims 1 to 7.

9. Alternator according to claim 8, **characterised in that** positive controllable elements, connected through their anodes to the coil terminals, are placed, as well as the other elements of the power supply device connected through their anodes to the said coils, on a dissipater connected to a power supply line of the vehicle and **in that** negative controllable elements, connected through their cathodes to the coil terminals, are placed, as well as the other elements of the power supply device connected through their cathodes to the said coils, on a dissipater connected to the vehicle's earth.

## Patentansprüche

1. Stromversorgungsvorrichtung, insbesondere für das Bordnetz eines Kraftfahrzeugs, **dadurch gekennzeichnet, dass** es eine Gesamtheit von Induktionsspulen umfasst, die in einer vieleckig angeordneten Kopplung verbunden sind, und dass die besagten Spulen mit einem einzigen Gleichrichter verbunden sind, der eine von steuerbaren Elementen die die Umschaltung zwischen einer ersten Betriebsart, bei der bestimmte Induktionsspulen elektrisch in Serie geschaltet sind, und einer zweiten Betriebsart erlaubt, bei der alle besagten Induktionsspulen elektrisch parallel geschaltet sind,

2. Vorrichtung nach Anspruch 1, **dadurch gekennzeichnet, dass** sie sechs Induktionsspulen umfasst (1, 2, 3, 4, 5, 6), und dass diese in einer sechseckig angeordneten Kopplung verbunden sind.

3. Vorrichtung nach einem der Ansprüche 1 oder 2, **dadurch gekennzeichnet, dass** die besagten steuerbaren Elemente Thyristoren umfassen.

4. Vorrichtung nach Anspruch 3, **dadurch gekennzeichnet, dass** die Thyristoren zu drei Paaren (T1, T2, T3) zusammengefügt und abwechselnd mit drei Diodenpaaren (D1, D2, D3) mit den Klemmen der Spulen (1, 2, 3, 4, 5, 6) verbunden so die besagten Spulen elektrisch paarweise in Serie geschaltet sind, wenn die besagten Thyristoren (T1, T2, T3) nicht aktiviert sind.

5. Vorrichtung nach Anspruch 4, **dadurch gekennzeichnet, dass** jede der besagten Spulen (1, 2, 3, 4, 5, 6) über eine ihrer Klemmen mit der Anode einer der Dioden der Diodenpaare (D1, D2, D3) beziehungsweise mit der Kathode der anderen Diode des besagten Paares (D1, D2, D3) verbunden ist, und über ihre andere Klemme mit der Anode eines der Thyristoren eines der Thyristorenpaare (T1, T2, T3) beziehungsweise mit der Kathode des anderen Thyristors des besagten Paares (T1, T2, T3), wobei die Anoden der besagten Thyristoren oder Dioden, die über ihre Kathode mit den Spulen verbunden sind, mit der Masse verbunden sind, und die Kathoden der besagten Thyristoren und Dioden, die über ihre Anode mit den Spulen verbunden sind, mit der Speiseleitung des Bordnetzes des Fahrzeugs verbunden sind.

6. Vorrichtung nach einem der Ansprüche 1 bis 3, **dadurch gekennzeichnet, dass** die besagten Thyristoren zu vier Paaren (T1, T2, T3, T4) zusammengefügt sind, und dass die Vorrichtung Dioden umfasst, die zu zwei Paaren (D1, D2) zusammengefügt sind, wobei die Thyristoren (T1, T2, T3, T4) und die Dioden (D1, D2) an die Klemmen der Spulen (1, 2, 3, 4, 5, 6) angeschlossen sind, so dass die besagten Spulen in Dreiergruppen elektrisch in Serie geschaltet sind, wenn die besagten Thyristoren nicht aktiviert sind.

7. Vorrichtung nach einem der Ansprüche 3 bis 6, **dadurch gekennzeichnet, dass** die besagten Thyristoren teilweise oder vollständig durch steuerbare Elemente mit Transistor ersetzt werden.

8. Wandler für ein Kraftfahrzeug, **dadurch gekennzeichnet, dass** er eine Versorgungsvorrichtung nach einem der Ansprüche 1 bis 7 umfasst.

9. Wandler nach Anspruch 8, **dadurch gekennzeichnet, dass** positive steuerbare Elemente, die über ihre Anode mit den Spulenklemmen verbunden sind, sowie die anderen Elemente der Versorgungsvorrichtung, die über ihre Anoden mit den besagten Spulen verbunden sind, auf einem Verbraucher angeordnet sind, der mit einer Speiseleitung des Fahrzeugs verbunden ist, und dass negative steuerbare Elemente, die über ihre Kathode mit den Spulenklemmen verbunden sind, sowie die anderen Elemente der Versorgungsvorrichtung, die über ihre Kathoden mit den besagten Spulen verbunden sind, auf einem Verbraucher angeordnet sind, der mit der Masse des Fahrzeugs verbunden ist.
